# EUROPEAN PATENT APPLICATION

(11) **EP 4 753 230 A1**
(43) Date of publication of application: **03.06.2026**
(21) Application number: 25209697.9
(22) Date of filing: 20.10.2025
(51) Int. Cl.: H04L 61/5084, H04L 69/08, H04W 80/04

(54) **MOBILE INTER-OPERABILITY GATEWAY DEVICE INCLUDING LOCATOR ID SEPARATION PROTOCOL BASED COMMUNICATION OF MOBILE INTERNET PROTOCOL COMMUNICATION AND RELATED METHODS**

(30) Priority: 26.10.2024 US 202418927960
(71) Applicant: L3Harris Global Communications, Inc., Albany, NY 12207 (US)
(72) Inventor: NOVI, Matthew, Lynchburg, 24543 (US); HENGEVELD, Thomas A., Greenfield Center, 12833 (US)
(74) Representative: Schmidt, Steffen J.

(57) **Abstract**

A mobile inter-operability gateway device may include a processor and an associated memory. The processor may be configured to communicate, using a mobile internet protocol (MIP), with a MIP foreign agent device for communicating, using the MIP, with a mobile network host that communicates based upon the MIP and a Locator ID Separation Protocol (LISP). The processor may also be configured to translate between MIP and LISP communications, and communicate, using the LISP, with a LISP home agent device configured to communicate using the LISP.

## Description

### Technical Field

The present invention relates to the field of communications, and, more particularly, to land mobile radio communications and related methods.

### Background

A land mobile radio (LMR) communications system is a person-to-person (P2P) communication system. P2P voice communication may be performed using two-way radio transceivers which can be stationary, mobile, or portable.

Mobile Internet Protocol (MIP) is a communications protocol that permits mobile devices to move between wireless networking while maintaining an internet protocol (IP) address. The MIP permits location-independent routing on the Internet, as each mobile device, or node, may be identified by a home address that is independent of its current location on the Internet. When a mobile device is away from its home network, the mobile device may be associated with another IP address which identifies its current location, and its home address is associated with a local endpoint of a tunnel to its home agent.

Locator ID Separation Protocol (LISP) is also a communication protocol that provides improved routing scalability and facilitates flexible address assignment for multi-homing, provider independence, mobility, and virtualization. The LISP offers an alternative to traditional Internet architecture by introducing two separate IP addresses: one to indicate routing locators (RLOCs) for routing traffic through the global Internet and a second address for endpoint identifiers (EIDs) used to identify network sessions between devices. Tunneling is generally not supported by the LISP.

### Summary

A mobile inter-operability gateway device may include a processor and an associated memory configured to communicate, using a mobile internet protocol (MIP), with a MIP foreign agent for communicating, using the MIP, with a mobile network host that communicates based upon the MIP and a Locator ID Separation Protocol (LISP). The processor may be configured to translate between MIP and LISP communications, and communicate, using the LISP, with a LISP home agent device configured to communicate using the LISP. The mobile network host may include an LMR device, for example. The MIP foreign agent device may be configured to store home agent contact information.

The processor may be configured to communicate with the MIP foreign agent device to modify the home agent contact information to communicate with the LISP home agent device. The processor may be configured to modify static communications routes associated with a routing network for communication of an IP host device and the LISP home agent device, for example.

A system aspect is directed to a land mobile radio (LMR) communications system that may include a mobile network host configured to communicate based upon a mobile internet protocol (MIP) and a Locator ID Separation Protocol (LISP). The LMR communications system may also include a MIP foreign agent device configured to communicate with the mobile network host using the MIP and a LISP home agent device configured to communicate using the LISP. The LMR communications system may also include a mobile inter-operability gateway device configured to communicate with the MIP foreign agent device using the MIP, translate between MIP and LISP communications, and communicate with the LISP home agent device using the LISP.

The mobile network host may include an LMR device, for example. The MIP foreign agent device may be configured to store home agent contact information. The mobile inter-operability gateway device may be configured to communicate with the MIP foreign agent device to modify the home agent contact information to communicate with the LISP home agent device, for example.

The LMR communications system may include a LISP foreign agent device configured to communicate using the LISP. The mobile network host may be configured to communicate with the LISP foreign agent device using the LISP, for example. The mobile network host may be configured to communicate with the LISP home agent device using a broadband network, for example.

The mobile network host may be configured to bypass the mobile inter-operability gateway device to communicate with the LISP home agent device. The LMR communications system may further include an internet protocol (IP) host device configured to communicate with the mobile network host via the LISP home agent device. The IP host device and LISP home agent device may communicate via a routing network, for example.

The routing network may have static communications routes associated therewith for communicating using the MIP. The mobile inter-operability gateway device may be configured to modify the static communications routes, for example.

A method aspect is directed to a method of communicating. The method may include using a mobile network host to communicate based upon a mobile internet protocol (MIP) and a Locator ID Separation Protocol (LISP). The method may also include using a MIP foreign agent device configured to communicate with the mobile network host using the MIP. The method may further include using a LISP home agent device to communicate using the LISP and using a mobile inter-operability gateway device. Using the mobile inter-operability gateway may include using the mobile inter-operability gateway to communicate with the MIP foreign agent device using the MIP, translate between MIP and LISP communications, and communicate with the LISP home agent device using the LISP.

Another method aspect is directed to a method of land mobile radio (LMR) communications that includes using a mobile inter-operability gateway device to communicate, using a mobile internet protocol (MIP), with a MIP foreign agent device for communicating, using the MIP, with a mobile network host that communicates based upon the MIP and the LISP. Using the mobile inter-operability gateway device may include using the mobile inter-operability gateway device to translate between MIP and Locator ID Separation Protocol (LISP) communications, and communicate, using the LISP, with a LISP home agent device configured to communicate using the LISP.

### Brief Description of the Drawings

FIG. 1 is a schematic diagram of a LMR communications system in accordance with an embodiment.
FIG. 2 is a more detailed schematic block diagram of the LMR communications system of FIG. 1.
FIG. 3 is a more detailed schematic diagram of the LMR communications system of FIG. 1.
FIG. 4 is a more detailed schematic diagram of the LMR communications system of FIG. 1.
FIG. 5 is a flow diagram illustrating operation of the mobile inter-operability gateway device.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

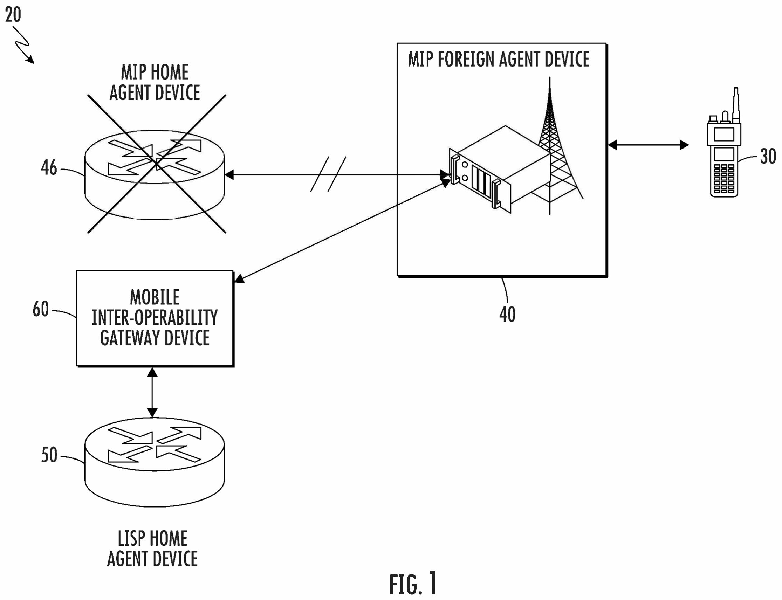

Referring initially to FIGS. 1-4, a land mobile radio (LMR) communications system **20** includes a mobile network host **30** configured to communicate based upon a mobile internet protocol (MIP). The mobile network host **30** may be in the form of a data service access point, for example. The mobile network host **30** may also include an LMR device, for example. An exemplary MIP is MIPv4. MIPv4 is a mobility standard that allows a mobile internet protocol (IP) host to move from one network access point to another while retaining the same IP address. A home agent device tracks the data service access point or foreign agent device, currently serving a mobile network host. The mobile network host may include a narrow band interface (e.g., LMR) and/or a broadband interface (e.g., 4G, LTE, Wifi, 5G). When a mobile network host or LMR radio arrives at a data service access point, it registers with the foreign agent device, which notifies the home agent device of its presence on the access point. Outbound packets to the mobile network host (e.g., mobile network host) are routed to the home agent device, encapsulated and forwarded to the foreign agent device. The foreign agent device decapsulates the packet and forwards it to the mobile network host. Inbound packets may be natively routed from the foreign agent device to the destination host without encapsulation. Static routes define which subnets are mobile.

The mobile network host **30** is also configured to communicate based upon a Locator ID Separation Protocol (LISP). As will be appreciated by those skilled in the art, the LISP uses Endpoint Identifiers (EIDs) and Routing Locators (RLOCs) based upon a mapping database. EIDs are IPv4 or IPv6 addresses that uniquely identify communication end hosts. EIDs do not include inter-domain topological information. The RLOCs are addresses assigned topologically to network attachment points and are typically routed inter-domain, as will be appreciated by those skilled in the art. Within the LISP, the EIDs and the RLOCs provide an architecture to build overlays on top of the underlying Internet. Mapping EIDs to sets of RLOCs is accomplished with the mapping database. By using a level of indirection for routing and addressing, separating an address identifier from its location permits scalability and mobility. By assigning EIDs to mobile devices (e.g., the mobile network host **30)** and RLOCs to the network nodes, LISP can provide relatively seamless mobility.

The LMR communications system **20** also includes a MIP foreign agent device **40** configured to communicate with the mobile network host **30** using the LISP. The MIP foreign agent device **40,** which may also be in the form of a data service access point, stores home agent contact information **41.** As will be appreciated by those skilled in the art, the home agent contact information **41** stored by a MIP foreign agent device **40** is associated with a MIP home agent device **46** (i.e., router). However, MIP home agent devices **46,** or more particularly, MIPv4 routers, are becoming increasingly unavailable. Thus, using the MIP in an LMR system is becoming a legacy form of LMR communications. As MIP home agent devices **46** (e.g., MIPv4 routers) fail, a replacement may not be available. Thus, it may be desirable to add new foreign agent sites to an LMR communications system. Additionally, with a mix of the LISP and the MIP, it may be increasingly difficult to form a static route table that permits a mobile network host **30** to roam between legacy (MIP) and new (LISP) sites/data access points or foreign agents.

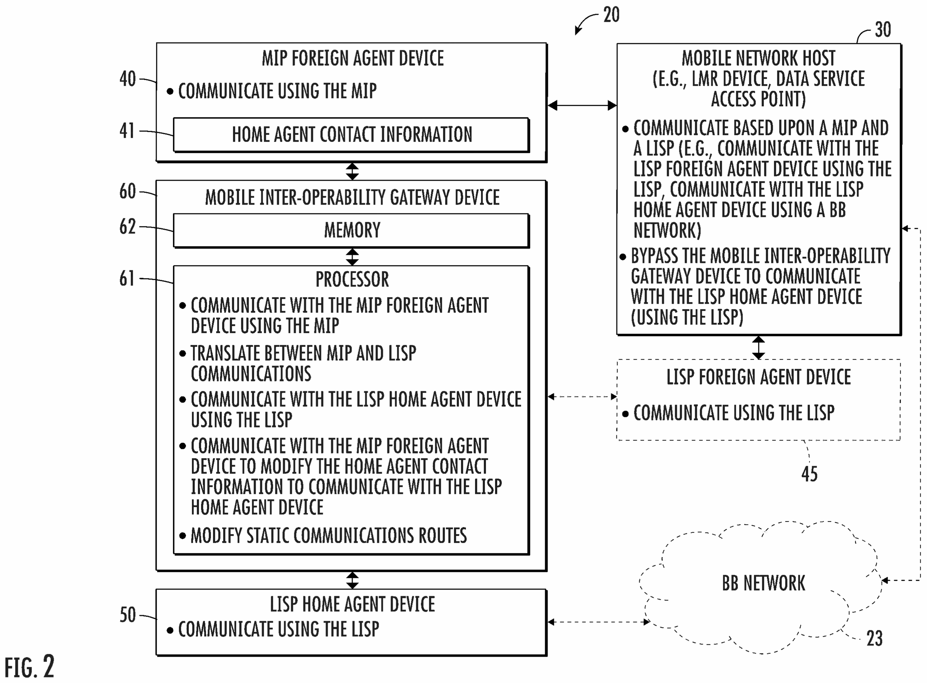

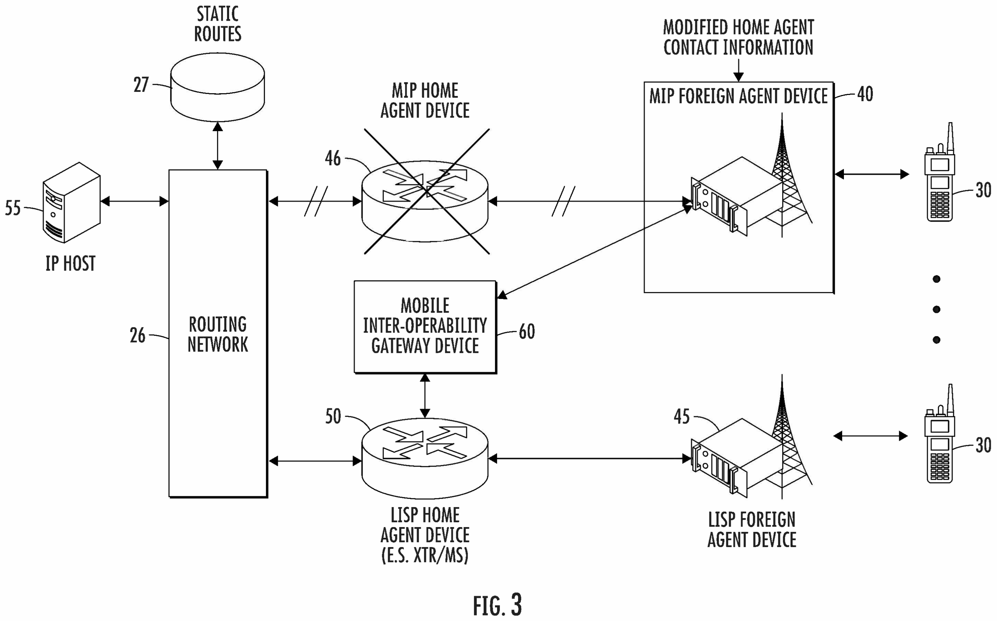

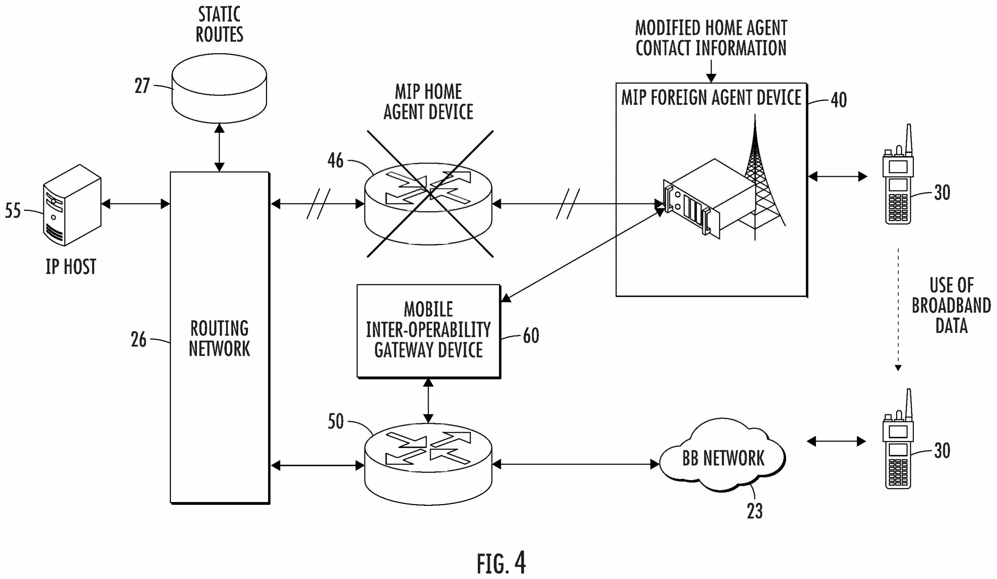

The LMR communications system **20** also includes a LISP home agent device **50** configured to communicate using the LISP. The LMR communications system **20** also includes a LISP foreign agent device **45** that communicates with the LISP home agent device **50** and the mobile network host **30** using the LISP (FIG. 3). The mobile network host **30** may also communicate with the LISP home agent device **50** using a broadband (BB) network **23,** for example, when the mobile network host is configured to communicate using the LISP and the BB network, such as when the mobile network host is in the form of a converged radio (FIGS. 2 and 4).

The LMR communications system **20** also includes a mobile inter-operability gateway device (MIGD) **60.** The MIGD includes a processor **61** and an associated memory **62.** While operations of the MIGD are described herein, the processor **61** and the associated memory **62** cooperate to perform the operations.

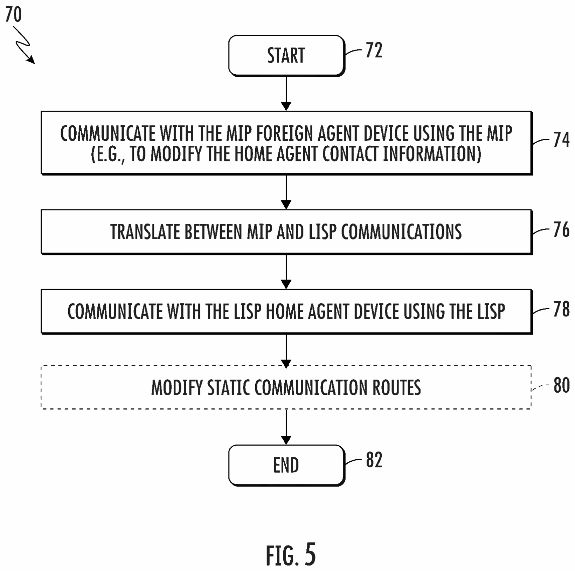

Referring additionally to the flowchart **70** in FIG. 5, beginning at Block **72,** operations of the MIGD **60** will now be described. The MIGD **60,** at Block **74,** communicates with the MIP foreign agent device **40** using the MIP. More particularly, the MIGD **60** may communicate with the MIP foreign agent device **40** to modify the home agent contact information **41** to communicate with the LISP home agent device **50.**

The MIGD **60** translates between MIP and LISP communications (Block **76).** More particularly, the MIGD **60** operates translating xIR microservices. The MIGD **60** also provides tunnel routing on the LISP side of the translation and appears like a home agent on the site side. The MIGD **60** may also be stateless to the MIP foreign agent device **40.** The MIGD **60** communicates with the LISP home agent device **50** using the LISP (Block **78).** As will be appreciated by those skilled in the art, for communications of the mobile network host **30** using the LISP, the MIGD **60** is bypassed in that the mobile network host communicates with the LISP home agent device **50** without communicating through the MIGD.

The LMR communications system **20** also includes an IP host device **55.** The IP host device **55** is configured to communicate with the mobile network host **30** via the LISP home agent device **50.** More particularly, the IP host device **55** and the LISP home agent device **50** communicate via a routing network **26.** The routing network **26** has static communications routes **27** associated therewith using the MIP. Accordingly, the MIGD **60** modifies the static communications routes **27** (Block **80).** Based upon the modified static communications routes **27** and the updated contact information **41,** the MIGD **60** thus routes LMR communication using the MIP through the MIGD to the LISP home agent device **50.** Accordingly, the LISP can be used with legacy LMR systems that use the MIP. Roaming of outbound data may occur, for example, as between a handoff between a MIP foreign agent device **40** and a LISP foreign agent device **45.** The MIGD **60** addresses these shortcomings by at least forming a static route table that permits a mobile network host **30** to roam between legacy (MIP) and new sites/data service access points (LISP). Operations end at Block **82**.

A method aspect is directed to a method of communicating. The method includes using a mobile network host 30 to communicate based upon a mobile internet protocol (MIP) and a Locator ID Separation Protocol (LISP). The method also includes using a MIP foreign agent device **40** configured to communicate with the mobile network host **30** using the MIP. The method further includes using a LISP home agent device **50** to communicate using the LISP and using a mobile inter-operability gateway device **60**. Using the mobile inter-operability gateway **60** may include using the mobile inter-operability gateway to communicate with the MIP foreign agent device **40** using the MIP, translate between MIP and LISP communications, and communicate with the LISP home agent device **50** using the LISP.

Another method aspect is directed to a method of land mobile radio (LMR) communications that includes using a mobile inter-operability gateway device **60** to communicate, using a mobile internet protocol (MIP), with a MIP foreign agent device **40** for communicating, using the MIP, with a mobile network host **30** that communicates based upon the MIP and the LISP. Using the mobile inter-operability gateway device **60** includes using the mobile inter-operability gateway device to translate between MIP and Locator ID Separation Protocol (LISP) communications, and communicate, using the LISP, with a LISP home agent device **50** configured to communicate using the LISP.

While several embodiments have been described herein, it should be appreciated by those skilled in the art that any element or elements from one or more embodiments may be used with any other element or elements from any other embodiment or embodiments. Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile inter-operability gateway device comprising:
a processor and an associated memory configured to
communicate, using a mobile internet protocol (MIP), with a MIP foreign agent device for communicating, using the MIP, with a mobile network host that communicates based upon the MIP and a Locator ID Separation Protocol (LISP),
translate between MIP and LISP communications, and
communicate, using the LISP, with a LISP home agent device configured to communicate using the LISP.

2. The mobile inter-operability gateway device of Claim 1 wherein the mobile network host comprises an LMR device; and/or
wherein the MIP foreign agent device is configured to store home agent contact information; and wherein the processor is configured to communicate with the MIP foreign agent device to modify the home agent contact information to communicate with the LISP home agent device; and/or
wherein the processor is configured to modify static communications routes associated with a routing network for communication of an IP host device and the LISP home agent device.

3. A land mobile radio (LMR) communications system comprising:
a mobile network host configured to communicate based upon a mobile internet protocol (MIP) and a Locator ID Separation Protocol (LISP);
a MIP foreign agent device configured to communicate with the mobile network host using the MIP;
a LISP home agent device configured to communicate using the LISP; and
a mobile inter-operability gateway device configured to
communicate with the MIP foreign agent device using the MIP,
translate between MIP and LISP communications, and
communicate with the LISP home agent device using the LISP.

4. The LMR communications system of Claim 3 wherein the mobile network host comprises an LMR device; and/or
wherein the MIP foreign agent device is configured to store home agent contact information; and wherein the mobile inter-operability gateway device is configured to communicate with the MIP foreign agent device to modify the home agent contact information to communicate with the LISP home agent device; and/or
comprising a LISP foreign agent device configured to communicate using the LISP; and wherein the mobile network host is configured to communicate with the LISP foreign agent device using the LISP; and/or
wherein the mobile network host is configured to communicate with the LISP home agent device using a broadband network; and/or
wherein the mobile network host is configured to bypass the mobile inter-operability gateway device to communicate with the LISP home agent device.

5. The LMR communications system of Claim 3 further comprising an internet protocol (IP) host device configured to communicate with the LMR device via the LISP home agent device.

6. The LMR communications system of Claim 5 wherein the IP host device and LISP home agent device communicate via a routing network.

7. The LMR communications system of Claim 6 wherein the routing network has static communications routes associated therewith for communicating using the MIP; and wherein the mobile inter-operability gateway device is configured to modify the static communications routes.

8. A method of communicating comprising:
using a mobile network host to communicate based upon a mobile internet protocol (MIP) and a Locator ID Separation Protocol (LISP);
using a MIP foreign agent device configured to communicate with the mobile network host using the MIP;
using a LISP home agent device to communicate using the LISP; and
using a mobile inter-operability gateway device to communicate with the MIP foreign agent device using the MIP, translate between MIP and LISP communications, and communicate with the LISP home agent device using the LISP.

9. The method of Claim 8 wherein using the MIP foreign agent device comprises using the MIP foreign agent device to store home agent contact information; and wherein using the mobile inter-operability gateway device comprises using the mobile inter-operability gateway device to communicate with the MIP foreign agent device to modify the home agent contact information to communicate with the LISP home agent device; and/or
comprising using a LISP foreign agent device to communicate using the LISP; and wherein using the mobile network host comprises using the mobile network host to communicate with the LISP foreign agent device using the LISP; and/or
wherein using the mobile network host comprises using the mobile network host to bypass the mobile inter-operability gateway device to communicate with the LISP home agent device.

10. The method of Claim 8 further comprising using an internet protocol (IP) host device to communicate with the mobile network host via the LISP home agent device.

11. The method of Claim 10 wherein using the IP host device and LISP home agent device comprise using the IP host device and LISP home agent to communicate via a routing network.

12. A method of land mobile radio (LMR) communications comprising: using a mobile inter-operability gateway device to
communicate, using a mobile internet protocol (MIP), with a MIP foreign agent device for communicating, using the MIP, with a mobile network host that communicates based upon the MIP and a Locator ID Separation Protocol (LISP),
translate between MIP and LISP communications, and
communicate, using the LISP, with a LISP home agent device configured to communicate using the LISP.

13. The method of Claim 12 wherein the MIP foreign agent device is configured to store home agent contact information; and wherein using the mobile inter-operability gateway device comprises using the mobile inter-operability gateway device to communicate with the MIP foreign agent device to modify the home agent contact information to communicate with the LISP home agent device.

14. The method of Claim 12 wherein using the mobile inter-operability gateway device comprises using the mobile inter-operability gateway device to modify static communications routes associated with a routing network for communication of an IP host device and the LISP home agent device.
